Europäisches Patentamt

(19) European Patent Office

Office européen des brevets

(11) Numéro de publication: **0 101 372**

**A1**

# (12) DEMANDE DE BREVET EUROPEEN

(21) Numéro de dépôt: 83401622.2

(22) Date de dépôt: 05.08.83

(51) Int. Cl.³: **F 22 B 3/04**
**F 02 G 5/02**

(30) Priorité: 13.08.82 FR 8214136

(43) Date de publication de la demande:
22.02.84 Bulletin 84/8

(84) Etats contractants désignés:
AT BE CH DE GB IT LI LU NL SE

(71) Demandeur: ATELIERS DE CONSTRUCTIONS DU
CENTRE
Rue du Pré-la-Reine
F-63016 Clermont Ferrand(FR)

(72) Inventeur: Krieger, François
35, chemin des Sablons
F-78160 Marly le roi(FR)

(72) Inventeur: Vivier, Lucien
44, rue Vergniaud
F-75013 Paris(FR)

(74) Mandataire: Ramey, Daniel et al,
Cabinet NETTER 40, rue Vignon
F-75009 Paris(FR)

(54) **Procédé et installation à boucle thermodynamique pour la production d'énergie.**

(57) L'invention concerne un procédé et une installation de production d'énergie à partir d'une source chaude, au moyen d'une boucle thermodynamique fermée dans laquelle circule un fluide de travail qui est chauffé et vaporisé, puis détendu dans un organe moteur, condensé et à nouveau chauffé et vaporisé.

Selon l'invention, le fluide de travail est de l'eau qui, chauffée et surpressée, est amenée à un organe (22) de détente à enthalpie constante, produisant de la vapeur et du liquide, cette vapeur passant par un surchauffeur (14) pour alimenter en vapeur surchauffée un moteur à palettes (34) produisant de l'énergie.

L'invention s'applique notamment à la récupération d'une partie au moins de l'énergie thermique dissipée par un moteur à combustion interne.

EP 0 101 372 A1

./...

FIG. 1

1

## Procédé et installation à boucle thermodynamique pour la production d'énergie.

L'invention concerne un procédé et une installation pour la production d'énergie à partir de chaleur cédée par une source chaude, au moyen d'une boucle thermodynamique fermée dans laquelle on fait circuler un fluide de travail qui est chauffé par la chaleur cédée par la source chaude, puis vaporisé, détendu dans un organe moteur, et condensé pour être à nouveau chauffé et vaporisé.

On connaît déjà de tels procédés et installations qui sont utilisés par exemple pour la récupération d'une partie de l'énergie thermique dissipée par un moteur thermique tel qu'un moteur à combustion interne monté à poste fixe ou dans un véhicule. Le fluide de travail utilisé est en général un fluide organique tel que celui connu sous la dénomination "fluorinol 85", ou du toluène. Ces fluides ont pour inconvénients d'être coûteux et polluants, et risquent de se décomposer à température élevée. En outre, les procédés et installations connus ont un rendement relativement faible et donc une rentabilité réduite. Les installations connues sont de plus assez volumineuses, d'où des difficultés pour les associer à un moteur de combustion interne de véhicule.

L'invention a pour objet un procédé et une installation de production d'énergie à partir de la chaleur cédée par une source chaude quelconque, qui permettent de pallier ces inconvénients.

L'invention propose à cet effet un procédé pour la production d'énergie à partir d'une source chaude, au moyen d'une boucle thermodynamique fermée dans laquelle on fait circuler un fluide de travail qui est chauffé par la source chaude, et vaporisé puis détendu dans un organe moteur et condensé pour être à nouveau chauffé et vaporisé, caractérisé en ce qu'il consiste à augmenter la pression du fluide de travail condensé à une valeur comprise entre 100 et 200 bars environ, puis à le chauffer en phase liquide par échange de chaleur avec la source chaude, à lui faire subir ensuite une détente à enthalpie constante produisant de la vapeur et du liquide, à surchauffer cette vapeur par échange de chaleur avec la source chaude, et à alimenter l'organe moteur par la vapeur surchauffée.

Le procédé selon l'invention permet ainsi d'obtenir des rendements qui sont de 1,5 à 2 fois supérieurs aux rendements des procédés de la technique antérieure.

Selon une autre caractéristique de l'invention, le fluide de travail est de l'eau, c'est-à-dire un fluide de travail bon marché, non polluant et non toxique.

Selon encore une autre caractéristique de l'invention, le procédé consiste à faire subir au liquide résultant de la détente à enthalpie constante, une nouvelle détente à enthalpie constante produisant du liquide et de la vapeur, à mélanger cette vapeur avec la vapeur détendue sortant de l'organe moteur, à surchauffer ce mélange de vapeur par échange de chaleur avec la source chaude et à alimenter par cette vapeur surchauffée un second organe moteur.

Quand la source chaude est constituée par les effluents chauds d'un moteur thermique, par exemple un moteur à combustion interne, on obtient ainsi une puissance qui est comprise entre 15 et 23% environ de la puissance nominale du moteur thermique.

La source chaude peut être quelconque et, par exemple, du type à énergie solaire, à énergie géothermique, ou encore être constituée par des rejets industriels chauds, etc.

L'invention propose également une installation pour l'éxécution de ce procédé, comprenant un circuit fermé de circulation d'un fluide de travail, comportant un échangeur de chaleur traversé d'une part par un effluent de la source chaude et, d'autre part, par le fluide de travail, un condenseur, et au moins une pompe de circulation et de mise en pression du fluide de travail condensé pour alimenter l'échangeur de chaleur, caractérisée en ce que cet échangeur de chaleur comprend au moins deux circuits de chauffage du fluide de travail, dont le premier est alimenté par la pompe et alimente en liquide de travail chauffé et surpressé un organe de détenteà enthalpie constante dans lequel le liquide de travail est détendu et en partie vaporisé, et dont le second forme un surchauffeur alimenté par la vapeur produite dans l'organe de détente et alimente en vapeur surchauffée l'organe moteur.

Selon encore une autre caractéristique de l'invention, l'échangeur de chaleur comprend un troisième circuit de chauffage du fluide de travail, formant surchauffeur de vapeur, dont l'entrée est reliée à l'échappement dudit organe moteur et dont la sortie est reliée à l'admission d'un second organe moteur dont l'échappement alimente le condenseur.

Selon encore une autre caractéristique importante de l'invention, le ou les organes moteurs sont des moteurs à palettes alimentés en vapeur surchauffée et dans lesquels la détente de la vapeur s'effectue en vapeur sèche.

4                                    0101372

Une installation selon l'invention est particulièrement fiable, a un rendement élevé et est beaucoup moins volumineuse que les installations comparables de la technique antérieure.

Dans la description qui suit, faite à tire d'exemple, on se réfère aux dessins annexés, dans lesquels :

- la figure 1 est une vue schématique d'une installation selon l'invention ;

- la figure 2 est une vue schématique partielle en coupe longitudinale d'un moteur à palettes utilisé dans l'installation de la figure 1 ;

- la figure 3 est une vue partielle en coupe selon la ligne III-III de la figure 2.

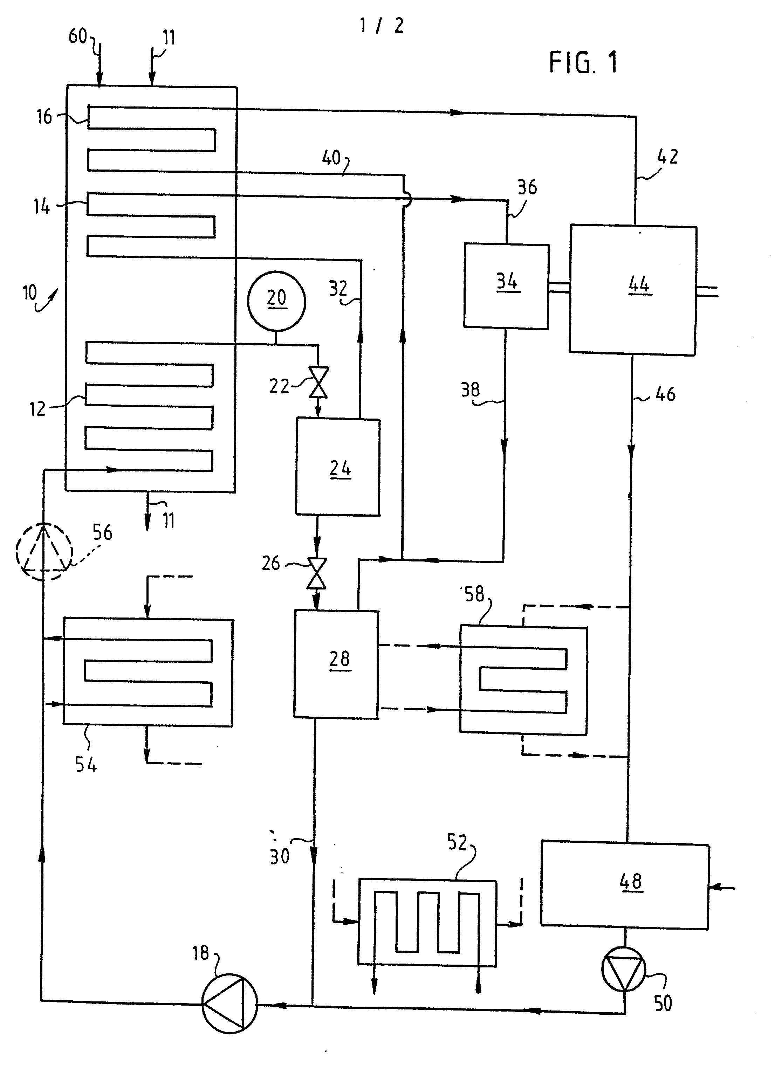

On se réfère d'abord à la figure 1, qui représente schématiquement un exemple de réalisation d'une installation selon l'invention.

Cette installation comprend un échangeur de chaleur 10 formant chaudière, qui est traversé par des effluents chauds 11 d'une source chaude (moteur thermique, énergie solaire, etc.) et qui contient des faisceaux de tubes 12, 14 et 16 dans lesquels circule le fluide de travail qui, de préférence, est de l'eau.

L'eau est fournie à l'entrée du faisceau de tubes 12 en phase liquide et sous pression élevée , comprise entre 100 200 bars environ,        par une pompe volumétrique 18. La sortie du faisceau de tubes 12 est reliée, par l'intermédiaire d'un réservoir tampon 20, à l'entrée d'un organe 22 de détente à enthalpie constante dont la sortie est reliée à un réservoir 24 formant séparateur liquide-vapeur.

La sortie de liquide du réservoir 24 est reliée à l'entrée d'un autre organe 26 de détente à enthalpie constante dont la sortie est reliée à un second réservoir 28 formant séparateur liquide-vapeur, la sortie de liquide de ce réservoir étant reliée à l'entrée de la pompe 18. Les deux organes de détente 22 et 24 réalisent une détente statique de l'eau chauffée sous pression qui les alimente et sont par exemple du type à vanne de laminage, dont la pression de sortie est pilotée par une pression de consigne, de sorte que la pression de sortie reste égale à la pression de consigne en dépit de variations de la pression d'entrée du liquide.

La sortie de vapeur 32 du premier réservoir 24 est reliée à l'entrée du faisceau de tubes 14 de la chaudière 10, qui forme un surchauffeur, et dont la sortie est reliée à l'admission 36 d'un premier moteur à palettes 34 haute pression dont l'échappement 38 est relié, avec la sortie de vapeur du second réservoir 28, à l'entrée 40 du troisième faisceau de tubes 16 de la chaudière 10. Ce faisceau de tubes est un surchauffeur de vapeur et sa sortie est reliée à l'admission 42 d'un second moteur à palettes 44, basse pression, dont l'échappement 46 est relié à l'entrée du faisceau de tubes d'un condenseur 48 dont la sortie de liquide est reliée à l'entrée d'une pompe volumétrique 50. La sortie de cette pompe est reliée, avec la sortie de liquide du second réservoir 28, à l'entrée de la pompe volumétrique 18. La vapeur détendue circulant dans le faisceau de tubes du condenseur 48 est refroidie par un fluide extérieur, qui peut être de l'air ou de l'eau selon les cas.

Le fonctionnement de cette installation va être décrit ci-dessous, dans un exemple où les effluents 11 de la source chaude traversant le chaudière 10 sont les gaz d'échappemnnt d'un moteur diesel d'une puissance de 1800 kW.

La pompe 18 fournit de l'eau (en phase liquide) à une température de 100° C environ et à une pression de 140 bars au faisceau de tubes 12 de la chaudière 10.

Les gaz d'échappement 11 ont à l'entrée de la chaudière une température d'environ 450° C et une température de 150° C environ à la sortie. L'eau chauffée sous pression arrivant à l'entrée de l'organe de détente 22 est à une température de 340° C et à une pression de 140 bars. Le mélange de vapeur et d'eau sortant de l'organe de détente à enthalpie constante rentre dans le réservoir 24, dont la sortie de vapeur reliée au surchauffeur 14 alimente celui-ci en vapeur d'eau à une température de 230° C environ et à une pression de 30 bars. Le surchauffeur 14 délivre, à l'admission du moteur à palettes 34, de la vapeur d'eau surchauffée à 400° C sous une pression de 30 bars. Après détente dans le moteur à palettes 34, la pression de vapeur à l'échappement est de 3 bars, la température de la vapeur est de 190° C environ.

La sortie de liquide du réservoir 24, qui est à une pression de 30 bars pour une température de 230° C environ, alimente l'organe 26 de détente à enthalpie constante dont la sortie fournit au réservoir 28 un mélange de vapeur et d'eau à une pression de 3 bars et à une température de 130° C environ. La sortie de liquide du réservoir 28 alimente la pompe 18. La vapeur sortant du réservoir 28 est mélangée à la vapeur d'échappement du moteur à palettes 34, et ce mélange à une température de 170° C environ et une pression de 3 bars est surchauffé dans le second surchauffeur 16 de la chaudière pour alimenter le second moteur à palettes 44 en vapeur à une température de 400° C sous une pression de 3 bars. La vapeur à l'échappement de ce moteur à palettes est à une température de 200° C pour une pression de 0,3 bar et est amenée au condenseur 48 d'où elle sort, en phase liquide, à une température d'environ 80° C et à la pression de 0,3 bar. La pompe 50 fournit de l'eau sous une pression de 3 bars qui est mélangée avec l'eau sortant du réservoir 28 pour alimenter la pompe 18 avec de l'eau à une température de 100° C environ et une pression de 3 bars.

Dans cet exemple, les arbres de sortie des moteurs à palettes 34 et 44 sont couplé et tournent à une vitesse de 3000 tours par minute environ. La puissance de sortie du moteur à palettes 34 est d'environ 110 à 120 kW et celle du moteur à palettes 44 est de 160 à 170 kW. La puissance fournie par ces deux moteurs à palettes représente environ 15 à 20% de la puissance nominale du moteur diesel.

Quand la vapeur d'eau circulant dans le faisceau de tubes du condenseur 48 est refroidie par l'eau, il est possible de faire descendre la température de la vapeur d'eau condensée alimentant la pompe 50 à une température de l'ordre de 40° C. Il est alors intéressant d'interposer, entre la pompe 50 et la pompe 18, un échangeur de chaleur supplémentaire désigné par la référence 52, dont le faisceau de tubes est parcouru par l'eau fournie par la pompe 50, cette eau étant réchauffée par l'eau de refroidissement des cylindres du moteur diesel, qui circule dans l'échangeur 52.

Il est également possible de réchauffer encore cette eau par un autre échangeur de chaleur 54, dont le corps est parcouru par l'air de refroidissement d'un turbo-compresseur de suralimentation du moteur diesel. Dans ce cas, la pompe 18 est placée entre la sortie de l'échangeur 54 et l'entrée du faisceau de tubes 12 de la chaudière, comme représenté en 56 en trait pointillé sur le dessin.

Il est également possible d'interposer, entre l'échappement du moteur à palettes basse pression 44 et l'entrée du condenseur 48 un échangeur de chaleur 58 formant récupérateur-désurchauffeur, dont le faisceau de tubes est parcouru par l'eau du réservoir 28 et dont le corps est traversé par la vapeur d'échappement du moteur à palettes 44.

Les débits des pompes volumétriques 18 et 50 sont, dans cet exemple, respectivement de 2,3 $m^3/h$ et de 1,3 $m^3/h$.

L'invention prévoit également d'associer à la chaudière 10 un brûleur alimenté en carburant, ce qui permet, en cas de marche au ralenti ou d'arrêt du moteur diesel, de maintenir à une valeur de consigne la puissance fournie par les moteurs à palettes 174 et 184.

Une installation selon l'invention, telle que représentée en figure 1, peut être associée à un moteur thermique dont la puissance nominale est comprise entre 100 et 5000 kW environ, pour fournir une puissance comprise entre 15 et 23% environ de la puissance nominale de ce moteur thermique.

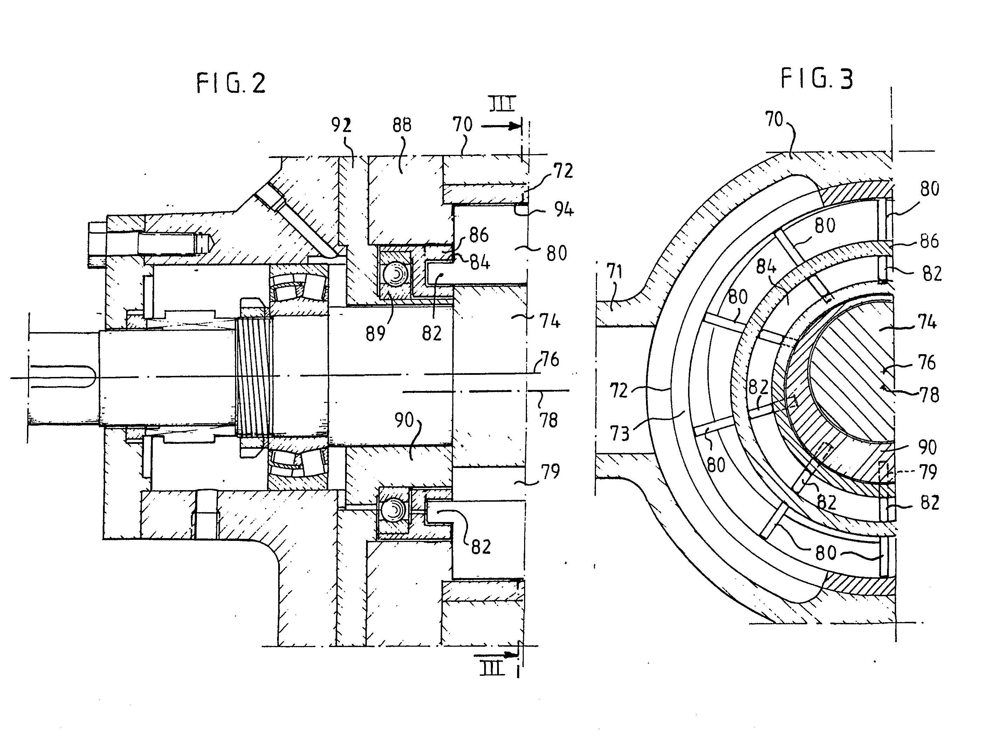

On se réfère maintenant aux figures 2 et 3 qui sont des vues schématiques partielles en coupe longitudinale et en coupe transversale respectivement de l'un des moteurs à palettes faisant partie de l'installation de la figure 1.

Ce moteur à palettes comprend un corps 70 pourvu d'orifices radiaux 71 d'admission et d'échappement de la vapeur, dans lequel est fixée amoviblement une chemise sensiblement cylindrique 72 comportant des fentes ou lumières 73 d'admission et d'échappement de la vapeur. Un rotor 74 est monté à rotation à l'intérieur de la chmise 72, autour d'un axe 76 excentré par rapport à l'axe 78 de la chemise. Le rotor 74 comprend des fentes radiales 79 débouchant sur sa surface périphérique extérieure et recevant des palettes 80. Ces palettes présentent, à leurs extrémités longitudinales ou axiales, des talons rectangulaires 82 qui sont engagés dans des rainures annulaires 84 de deux bagues 86 disposées axialement de part et d'autre du rotor 74 dans des alésages des flasques d'extrémités 88 fermant axialement le corps 70 du moteur à palettes. Les bagues 86, qui ont le même axe 78 que la chemise 72, sont supportées par des roulements à bille 89 montés sur des portées cylindriques 90 de plaques 92 fixées extérieurement sur les flasques d'extrémités 88.

Ces portées cylindriques 90 présentent une surface cylindrique interne d'axe 76, traversée avec jeu par l'arbre du rotor 74, et une surface externe cylindrique d'axe 78, portant les roulements à billes 89.

L'engagement des talons 82 des palettes 80 dans les rainures annulaires des bagues 86 permet de maintenir un jeu très faible, compris entre quelques microns et 1 ou 2/100ème de millimètre, entre les bords longitudinaux radialement externes 94 des palettes 80 et la surface interne sensiblement cylindrique de la chemise 72. On supprime ainsi la quasi-totalité des frottements entre, d'une part, les palettes 80 et, d'autre part, la chemise 72 et les flasques d'extrémités 88 du corps 70 du moteur à palettes. Cette suppression des frottements permet au moins de doubler la vitesse de rotation du rotor 74, d'où un accroissement considérable de la puissance fournie par ce moteur à palettes.

L'invention présente les avantages suivants :

- elle permet de récupérer, sur l'arbre de sortie du ou des moteurs à palettes, une puissance beaucoup plus importante que dans la technique antérieure (par exemple comprise entre 15 et 23% environ de la puissance nominale d'un moteur diesel dont les gaz d'échappement constituent les effluents chauds alimentant la chaudière) ;

- la chaudière de l'installation selon l'invention est beaucoup plus simple qu'une chaudière à deux niveaux de vapeur de la technique antérieure ;

- les organes de détente à enthalpie constante permettent de maintenir avec précision à une valeur de consigne la pression de la vapeur fournie aux surchauffeurs de la chaudière, indépendamment des variations de puissance de la chaudière ;

- le débit d'eau fourni par la pompe 18 (ou 56) est constant et indépendant de la puissance fournie par les moteurs à palettes, dont la régulation se trouve facilitée ;

- la surchauffe de la vapeur basse pression fournie au moteur à palettes 44 permet d'effectuer la totalité de la détente de la vapeur en vapeur sèche ;

- le fluide de travail utilisé est de l'eau, qui est non polluante, non toxique et bon marché, et qui permet d'utiliser des échangeurs de chaleur moins volumineux que dans le cas d'un fluide de travail organique ;

- la récupération de chaleur sur l'air de refroidissement du turbo-compresseur de suralimentation d'un moteur diesel, au moyen de l'échangeur 54, permet de ne pas abaisser outre mesure la température des gaz d'échappement en sortie de la chaudière, dans le cas où le combustible du moteur diesel est à forte teneur en soufre.

Revendications

1) Procédé pour la production d'énergie à partir d'une source chaude, au moyen d'une boucle thermodynamique fermée dans laquelle on fait circuler un fluide de travail qui est chauffé par la source chaude et vaporisé puis détendu dans un organe moteur et condensé pour être à nouveau chauffé et vaporisé, caractérisé en ce qu'il consiste à augmenter la pression du fluide de travail condensé à une valeur comprise entre 100 et 200 bars environ, puis à le chauffer en phase liquide par échange de chaleur avec la source chaude, à lui faire subir ensuite une détente à enthalpie constante produisant de la vapeur et du liquide, à surchauffer cette vapeur par échange de chaleur avec la source chaude et à alimenter l'organe moteur (34,44) par la vapeur surchauffée.

2) Procédé selon la revendication 1, caractérisé en ce qu'il consiste à condenser la vapeur détendue sortant de l'organe moteur (34,44), à mélanger le condensat au liquide obtenu par la détente à enthalpie constante et à mettre le mélange liquide résultant à nouveau sous pression.

3) Procédé selon la revendication 1, caractérisé en ce qu'il consiste à faire subir au liquide résultant de la détente à enthalpie constante une nouvelle détente à enthalpie constante produisant du liquide et de la vapeur, à mélanger cette vapeur avec la vapeur détendue sortant de l'organe moteur (34), à surchauffer ce mélange de vapeur par échange de chaleur avec la source chaude et à alimenter par cette vapeur surchauffée un second organe moteur (44).

4) Procédé selon la revendication 3, caractérisé en ce qu'il consiste à condenser la vapeur détendue sortant du second organe moteur (44), puis à mélanger ce condensat au liquide résultant de la seconde détente à enthalpie constante, et à mettre à nouveau sous pression le mélange liquide résultant.

5) Procédé selon la revendication 4, caractérisé en ce qu'on augmente la pression du condensat à une valeur égale à celle du liquide résultant de la seconde détente à enthalpie constante, avant de le mélanger à ce liquide.

6) Procédé selon l'une des revendications précédentes, caractérisé en ce que le fluide de travail est de l'eau.

7) Procédé selon l'une des revendications précédentes, caractérisé en ce que la source chaude est constituée par les gaz d'échappement d'un moteur thermique.

8) Procédé selon l'ensemble des revendications 3 à 7, caractérisé en ce que la puissance fournie par les deux organes moteur (34, 44) est comprise entre 15 et 23% environ de la puissance nominale du moteur thermique.

9) Installation pour l'exécution du procédé selon l'une des revendications précédentes, comprenant un circuit fermé de circulation d'un fluide de travail, comportant un échangeur de chaleur traversé d'une part par des effluents de la source chaude et d'autre part par le fluide de travail, un organe moteur alimenté en vapeur de fluide de travail, un condenseur, et au moins un pompe de circulation et de mise en pression du fluide de travail condensé pour alimenter l'échangeur de chaleur, caractérisée en ce que l'échangeur de chaleur (10) comprend au moins deux circuits (12, 14) de chauffage du fluide de travail, dont le premier (12) est alimenté par la pompe (18) et alimente en liquide de travail chauffé et surpressé un organe (22) de détente à enthalpie constante dans lequel le liquide de travail est détendu et en partie vaporisé, et dont le second (14) est un surchauffeur alimenté par la vapeur produite dans l'organe de détente (22) et alimente en vapeur surchauffée l'organe moteur (34).

13         **0101372**

10) Installation selon la revendication 9, caractérisée en ce que la sortie de l'organe de détente (22) est reliée à un séparateur liquide-vapeur (24) dont la sortie de vapeur est reliée à l'entrée du surchauffeur (14) et dont la sortie de liquide est reliée par la pompe (18) à l'entrée du premier circuit (12) de chauffage de l'échangeur (10).

11) Installation selon la revendication 9 ou 10, caractérisée en ce que l'échangeur (10) comprend un troisième circuit (16) de chauffage du fluide de travail, formant surchauffeur de vapeur, dont l'entrée est reliée à l'échappement dudit organe moteur (34) et dont la sortie est reliée à l'admission d'un second organe moteur (44) dont l'échappement alimente le condenseur (48).

12) Installation selon les revendications 10 et 11, caractérisée en ce que la sortie de liquide du séparateur (24) est reliée à la pompe (18) par un second organe (26) de détente à enthalpie constante et par un second séparateur liquide-vapeur (28) dont la sortie de vapeur est également reliée au second surchauffeur (16) de l'échangeur de chaleur (10) et dont la sortie de liquide est reliée à l'entrée de la pompe (18).

13) Installation selon l'une des revendications 9 à 12, caractérisée en ce que ladite pompe (18) est une pompe volumétrique.

14) Installation selon l'une des revendications 11 à 13, caractérisée en ce que la sortie du condenseur (48) est reliée par une seconde pompe volumétrique (50) à l'entrée de la première pompe (18).

15) Installation selon l'une des revendications 9 à 14, caractérisée en ce que l'échangeur de chaleur (10) est traversé par les gaz d'échappement (11) d'un moteur thermique, constituant les effluents précités de la source chaude.

**0101372**

16) Installation selon la revendication 15, caractérisée en ce que l'échangeur de chaleur (10) est équipé d'un brûleur (60) alimenté en combustible et destiné à fonctionner quand le moteur thermique est arrêté ou tourne au ralenti, pour maintenir à une valeur déterminée la puissance fournie par le ou les organes moteurs (34, 44).

17) Installation selon l'une des revendications 9 à 16, caractérisée en ce que le ou les organes moteurs sont des moteurs à palettes.

18) Installation selon l'une des revendications 15 à 17, caractérisée en ce que la puissance fournie par le ou les organes moteurs (34, 44) est comprise entre 15 et 23% environ de la puissance nominale du moteur thermique.

FIG. 1

FIG.3

FIG.2

**0101372**

Office européen
des brevets

**RAPPORT DE RECHERCHE EUROPEENNE**

Numéro de la demande

EP 83 40 1622

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| Y | FR-A- 709 354 (SABATIER) <br><br> * Page 2, lignes 42-95; figures * <br><br> --- | 1-7,9, 10,12, 14-16 | F 22 B 3/04 <br> F 02 G 5/02 |
| Y | GB-A- 231 142 (CROSS) <br> * Page 1, ligne 73 jusqu'à page 2, ligne 109; figures * <br><br> --- | 1 | |
| A | FR-A-2 313 581 (RATEAU) <br><br> --- | | |
| A | DE-C- 280 325 (WÄRME) <br><br> --- | | |
| A | US-A-2 493 678 (MARINI) <br><br> --- | | DOMAINES TECHNIQUES RECHERCHES (Int. Cl. ³) |
| A | DE-C- 166 632 (BLANC) <br><br> ----- | | F 22 B <br> F 02 G |

Le présent rapport de recherche a été établi pour toutes les revendications

| Lieu de la recherche <br> LA HAYE | Date d'achèvement de la recherche <br> 21-11-1983 | Examinateur <br> VAN GHEEL J.U.M. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82